# EUROPÄISCHE PATENTSCHRIFT

(11) **EP 1 261 894 B1**
(45) Veröffentlichungstag und Bekanntmachung des Hinweises auf die Patenterteilung: **25.02.2015**
(21) Anmeldenummer: 00988550.0
(22) Anmeldetag: 20.10.2000
(51) Int. Cl.: B23Q 17/20, G01B 21/04

(54) **MESSDATENERFASSUNG AUF KOORDINATENMESS- UND DIGITALISIERMASCHINEN**
DETECTION OF MEASUREMENT DATA ON CO-ORDINATE MEASURING AND DIGITISING MACHINES
SAISIE DE DONNEES DE MESURE SUR DES MACHINES DE MESURE DE COORDONNEES ET DE NUMERISATION

(30) Priorität: 22.10.1999 DE 19950869
(43) Veröffentlichungstag der Anmeldung: 04.12.2002
(73) Patentinhaber: Carl Zeiss Industrielle Messtechnik GmbH, 73447 Oberkochen (DE)
(72) Erfinder: BECK, Rolf, 73728 Esslingen (DE)
(74) Vertreter: Gnatzig, Klaus
(86) Internationale Anmeldenummer: PCT/DE2000/003730
(87) Internationale Veröffentlichungsnummer: WO 2001/029623

(56) Entgegenhaltungen:
- US-A- 4 882 848
- US-A- 4 979 224
- US-A- 5 862 604
- US-A- 5 862 604
- PATENT ABSTRACTS OF JAPAN vol. 1999, no. 08, 30. Juni 1999 (1999-06-30) & JP 11 058182 A (FUKUOKA PREF GOV), 2. März 1999 (1999-03-02)

## Beschreibung

Die Erfindung betrifft ein Verfahren zur Messung geometrischer Eigenschaften von Werkstücken auf Koordinatenmeßmaschinen oder Digitalisiermaschinen mittels Meßgeräten, die eine Meßinformation über geometrische Eigenschaften des Werkstücks relativ zu dem Meßgerät liefern, abgekürzt oftmals als messende Sensoren bezeichnet.

### Vorbemerkung:

Im Weiteren wird sowohl für Koordinatenmeßmaschinen als auch Digitalisiermaschinen die Abkürzung KMG verwendet.

### Stand der Technik

Zur Erfassung 3-dimensionaler geometrischen Größen werden heute überwiegend KMG eingesetzt. Diese sind meist mit einem schaltenden Taster ausgestattet, der bei Berührung der Oberfläche ein elektrisches Signal generiert. Mit diesem Signal wird die Positionen der einzelnen linearen oder rotatorischen Achsen des KMG eingefroren, d.h. die Achspositionen in ein Ausgaberegister kopiert. Diese Information wird bei bekannter Kinematik des KMG inkl. des Tasters dazu verwendet, einen Meßpunkt in einem ortsfesten Koordinatensystem zu generieren. Bei der Erzeugung eines Meßpunktes werden teilweise weitergehende Fehlerkompensationen, wie z.B. Tastkugelradius-Korrektur, geometrische oder thermische Maschinenpositionsfehler-Korrektur, durchgeführt. Die Grundlage für die Fehlerkorrektur und z.T. auch für die Bestimmung der Kinematik ist meist ein Kalibrierprozeß.

Werden mehrere Punkte nacheinander in demselben ortsfesten Koordinatensystem gemessen, ist die relative Position der Meßpunkte im ortsfesten Koordinatensystem zueinander ein Maß für die relative Position der Berührpunkte auf der Werkstückoberfläche. Somit können an dem Werkstück geometrische Größen bestimmt werden.

In zunehmendem Maße werden bevorzugt zur Erfassung von Freiformflächen statt schaltenden Tastern messende Sensoren eingesetzt. Sowohl berührende als auch berührungslose Sensoren werden verwendet. Diese Sensoren bestimmen die Lage des Meßpunktes auf dem Werkstück relativ zu ihrer Aufnahme, d. h. in einem sensorfesten Koordinatensystem, im Weiteren rst-Koordinatensystem genannt. Eine Folge von Meßpunkten wird dabei in der Regel während der Bewegung des KMG erfaßt, man spricht von "scannendem" Betrieb.

Zur Berechnung eines Meßpunktes in einem ortsfesten Koordinatensystem muß zeitsynchron die Sensor-Information im rst-Koordinatensystem mit der Information zur Position des Sensors im ortsfesten Koordinatensystem verknüpft werden. Dies geschieht nach derzeit bekannten Verfahren, indem das Ergebnis der Messung des Sensors im rst-Koordinatensystem mit dem Ergebnis der Sensorpositionsbestimmung durch das KMG im ortsfesten Koordinatensystem in einer meist digitalen Signalverarbeitungseinheit so zeitgleich wie möglich erfaßt wird und anschließend aus diesen beiden Einzelinformationen ein Meßpunkt im ortsfesten Koordinatensystem berechnet wird.

Damit bei einem bekannten Verfahren tatsächlich die Informationen von Sensor und KMG vom selben Zeitpunkt stammen, müssen die Zeiten für die Meßwertgewinnung, -verarbeitung und -übertragung für Sensor und KMG gleich groß sein, damit die zeitsynchrone Verknüpfung der Ergebnisse auch einem gleichen Meßzeitpunkt entspricht. Andernfalls würde die Information des Sensors mit einer Position des Sensors verknüpft, die er zum Zeitpunkt der Informationsgewinnung gar nicht innehatte und dies würde mit Ausnahme von einigen Sonderfällen zu einer falschen Berechnung der Meßpunkte führten. Es sind zwar Systeme bekannt, die bei ungleicher, aber jeweils konstanter Signallaufzeit eine Korrektur durch eine Verzögerungsstrecke der schnelleren Information bevorzugt durch einen Ringpuffer vornehmen, diese sind aber störanfällig, weil die Annahme konstanter Signallaufzeiten insbesondere bei optischen Sensoren mit komplexer Signalverarbeitung nicht zu gewährleisten ist und auch die Signalübertragungszeit bis an den Punkt der Signalverarbeitungseinheit, an dem beide Informationen gleichzeitig erfaßt werden, im Allgemeinen nicht konstant ist. Das gilt vor allem, wenn die Signalverarbeitungseinheit ein komplexes Multitasking- Betriebssystem, wie z.B. Windows NT, benutzt.

Weiterhin setzen solche Systeme voraus, daß die Meßdatenrate von Sensor und KMG gleich ist, d.h. jeweils ein Ergebnis vom Sensor mit einem Ergebnis vom KMG verknüpft wird.

Es sind ferner Verfahren bekannt, bei denen der Zeitpunkt der Messung durch ein elektrisches Signal (Trigger) sowohl für das KMG als auch für den Sensor bestimmt wird.

Die US-Patentschrift US 4,882,848 beispielsweise zeigt einen messenden Sensor in Form eines messenden Tastkopfes, der sowohl wie ein messender Tastkopf betrieben werden kann, als auch wie ein schaltender Tastkopf betrieben werden kann. In einem Betriebsmodus, in dem der Tastkopf als messender Tastkopf betrieben wird, werden regelmäßig Triggersignale bereitgestellt, die zu einem Auslesen der aktuellen Maßstäbe des Koordinatenmessgerätes führen, die die Tastkopfposition repräsentieren, als auch gleichzeitig zu einem Auslesen der aktuellen Maßstäbe im Tastkopf führen, die die Taststiftposition des Taststiftes relativ zum Tastkopf repräsentieren. Aus den jeweiligen Tastkopfpositionen und den Taststiftpositionen werden dann Messwerte ermittelt.

Alle KMG, die für den Betrieb mit einem schaltenden Taster ausgelegt sind, erlauben diese Funktion, indem das Triggersignal wie ein Signal von einem schaltenden Taster behandelt wird. Die einsetzbaren Sensoren müssen ebenfalls eine Möglichkeit zur Synchronisation ausweisen. Dies kann sowohl ein Trigger-Eingang zur exakten Bestimmung des Meßzeitpunktes als auch ein Ausgangssignal (SYNC), das den exakten Meßzeitpunkt anzeigt, sein. Im ersten Fall muß ein Meßdatenerfassungssystem eine Triggerquelle enthalten, im zweiten Fall würde der Sensor selbst als Triggerquelle fungieren.

Die Signalverarbeitungseinheit bekannter Verfahren stellt sicher, daß genau ein Meßergebnis vom Sensor und KMG je Trigger weiterverarbeitet wird.

Im Gegensatz zu bekannten Verfahren ohne Triggersignal, wirkt sich eine unterschiedliche Signallaufzeit nicht mehr aus, da in der Signalverarbeitungseinheit die Gleichzeitigkeit der Messung durch die Folge der Ergebnisse und nicht mehr durch den Zeitpunkt der Erfassung der Ergebnisse bestimmt ist. Mit anderen Worten, das n-te Ergebnis nach einer Initialisierung vom KMG und das n-te Ergebnis nach einer Initialisierung vom Sensor stammen sicher vom gleichen Zeitpunkt, da sie vom gleichen Trigger ausgelöst wurden.

Hiervon ausgehend liegt unserer Erfindung die Aufgabe zugrunde ein Verfahren zur Bestimmung von Messpunkten der eingangs genannten Art vorzuschlagen, bei dem die Identifizierung, welches Ergebnis zum n-ten Trigger gehört, sicherer gemacht wird, und bei dem insbesondere eventuell auftretende Signalübertragungsfehler erkannt werden können. Aufgabe ist es außerdem eine entsprechende Messeinheit vorzuschlagen.

Die Aufgabe wird durch ein Verfahren mit den Merkmalen des unabhängigen Anspruches 1 gelöst, sowie durch eine Messeinheit gemäß dem unabhängigen Anspruch 5 gelöst.

Erfindungsgemäß sollen sowohl Sensoren als auch KMG in einer bevorzugten Variante des erfindungsgemäßen Verfahrens neben ihrer sonstigen Information eine TAN-NR. (Transaction identifier) übertragen, die mit jedem Trigger erhöht wird und bei Überschreitung einer maximalen Zahl wieder zurückgesetzt wird. Dadurch kann bei der Verknüpfung der KMG- und Sensordaten auf einfachste Weise Synchronität überprüft werden bzw. Synchronisierung erreicht werden.

Da insbesondere berührungslose Sensoren wesentlich dynamischer sind als das KMG, sind unterschiedliche Meßdatenraten von Sensor und KMG sinnvoll und mit erfindungsgemäßem Verfahren möglich, bevorzugt wenn das Verhältnis der Meßdatenraten ganzzahlig ist. Für die Berechnung von Meßpunkten werden in diesem Fall die Ergebnisse der KMG nach bekannten Verfahren interpoliert, so daß nach der Interpolation gleich viele Informationen vom

KMG und vom Sensor vorliegen und wie bei gleicher Meßdatenrate weiterverarbeitet werden können.

In einer bevorzugten Variante weist mindestens der Sensor, möglichst aber auch das KMG, einen FIFO Ausgabespeicher auf, der sicherstellt, daß auch unter nicht echtzeitfähigen Betriebssystemen (wie z.B. Windows NT) eine vollständige und eineindeutige Übertragung jeder einzelnen Information je Trigger sichergestellt ist. Insbesondere für die bei berührungslosen Sensoren möglichen hohen Datenraten wird dadurch verhindert, daß die Signalverarbeitungseinheit durch Belastungen mit anderen Aufgaben, die Signalübertragung nicht innerhalb der durch die Meßdatenrate vorgegebenen Zeit bearbeiten kann und damit einzelne Informationen gar nicht zur Weiterverarbeitung gelangen.

Der FIFO Ausgabespeicher insbesondere in Kombination mit der TAN-NR. erlaubt zum einen im Vergleich zu heutigen Lösungen sehr störsicheren Betrieb, zum anderen erlaubt er, die Informationen von Sensor oder KMG statt einzeln je Trigger in wählbaren Blockgrößen für mehrere Trigger zu übertragen, was die Belastung der Signalverarbeitungseinheit durch die Datenübertragung signifikant vermindert.

Das erfindungsgemäße Verfahren erlaubt daher ohne signifikante Erhöhung des Aufwandes an heute üblichen KMG eine wesentliche Steigerung der Meßdatenrate bei gleichzeitiger Erhöhung der Störsicherheit und Verminderung der Belastung der Signalverarbeitungseinheit.

## Patentansprüche

1. Verfahren zur Bestimmung von Messpunkten auf einem Werkstück mittels eines Koordinatenmeßgerätes mit einem messenden Sensor, wobei
- das Koordinatenmessgerät Messdaten mit einer ersten Messdatenrate erzeugt, und wobei ein Messzeitpunkt zur Messung eines Messergebnisses des Koordinatenmessgerätes durch ein erstes Triggersignal bestimmt wird
- der messende Sensor Messdaten mit einer zweiten Messdatenrate erzeugt, und ein Messzeitpunkt zur Messung eines Messergebnisses des messenden Sensors durch ein zweites Triggersignal bestimmt wird
- wobei das erste Triggersignal und das zweite Triggersignal in bekannter zeitlicher Relation stehen und wobei die bekannte zeitliche Relation Gleichheit ist und das erste Triggersignal und das zweite Triggersignal ein gemeinsames elektrisches Triggersignal ist
- **dadurch gekennzeichnet, dass** jedem Messergebnis ein zyklisch eindeutiger Identifikator zugefügt wird, der bis zu einer maximalen Anzahl an Messergebnissen eindeutig ist und sich nach überschreiten der maximalen Anzahl wiederholt, wobei der zyklisch eindeutige Identifikator eine TAN-Nummer ist, die nach einer Initialisierung vom Koordinatenmessgerät und vom messenden Sensor mit jedem elektrischen Triggersignal erhöht wird.

2. Verfahren nach Anspruch 1, wobei das Koordinatenmessgerät und/oder der Sensor
- das Messergebnis an eine Signalverarbeitungseinheit übertragen oder
- das Messergebnis einer Signalverarbeitungseinheit zumindest zur Verfügung stellen und diese durch ein bevorzugt elektrisches Signal über das Vorliegen eines neuen Messergebnisses informieren.

3. Verfahren nach einem der Ansprüche 1 oder 2, wobei das Koordinatenmessgerät und/oder der messende Sensor die Folge von Messergebnissen speichern und die Folge von Messergebnissen nachfolgend in exakt der zeitlichen Reihenfolge der Messergebniserzeugung
- an eine Signalverarbeitungseinrichtung übertragen werden oder
- einer Signalverarbeitungseinheit zur Verfügung gestellt werden.

4. Verfahren nach einem der Ansprüche 1 bis 3, wobei die Messergebnisse des Koordinatenmessgerätes und/oder die Messergebnisse des messenden Sensors blockweise zu mehreren Messungen zusammengefasst
- an eine Signalverarbeitungseinrichtung übertragen werden oder
- zumindest einer Signalverarbeitungseinheit zur Verfügung gestellt werden

5. Messeinheit zur Bestimmung von Messpunkten auf einem Werkstück die ein Koordinatenmessgerät und einen messenden Sensor aufweist, wobei die Messeinheit Mittel aufweist um folgendes Verfahren durchzuführen:
- das Koordinatenmessgerät erzeugt Messdaten mit einer ersten Messdatenrate , wobei ein Messzeitpunkt zur Messung eines Messergebnisses des Koordinatenmessgerätes durch ein erstes Triggersignal bestimmt wird
- der messende Sensor erzeugt Messdaten mit einer zweiten Messdatenrate, und ein Messzeitpunkt zur Messung eines Messergebnisses des messenden Sensors wird durch ein zweites Triggersignal bestimmt
- das erste Triggersignal und das zweite Triggersignal stehen in bekannter zeitlicher Relation, wobei die bekannte zeitliche Relation Gleichheit ist und das erste Triggersignal und das zweite Triggersignal ein gemeinsames elektrisches Triggersignal ist
- **dadurch gekennzeichnet, dass** jedem Messergebnis ein zyklisch eindeutiger Identifikator zugefügt wird, der bis zu einer maximalen Anzahl an Messergebnissen eindeutig ist und sich nach überschreiten der maximalen Anzahl wiederholt, wobei der zyklisch eindeutige Identifikator eine TAN-Nummer ist, die nach einer Initialisierung vom Koordinatenmessgerät und vom messenden Sensor mit jedem elektrischen Triggersignal erhöht wird.

6. Messeinheit nach Anspruch 5, wobei Mittel vorhanden sind, um ein Verfahren gemäß einem der Ansprüche 2 bis 4 auszuführen.

## Claims

1. Method for determining measuring points on a workpiece by means of a coordinate measuring device having a measuring sensor, wherein
- the coordinate measuring device generates measurement data having a first measurement data rate, and wherein a measuring time for measuring a measurement result of the coordinate measuring device is determined by a first trigger signal
- the measuring sensor generates measurement data having a second measurement data rate, and a measuring time for measuring a measurement result of the measuring sensor is determined by a second trigger signal
- wherein the first trigger signal and the second trigger signal are in a known temporal relation and the known temporal relation is equality and the first trigger signal and the second trigger signal is a common electric trigger signal
- **characterized in that** to each measurement result, a cyclically unambiguous identifier is added which is unambiguous up to a maximum number of measurement results and is repeated after exceeding the maximum number, wherein the cyclically unambiguous identifier is a TAN number which is incremented after an initialization by the coordinate measuring device and by the measuring sensor with each electric trigger signal.

2. Method according to Claim 1, wherein the coordinate measuring device and/or the sensor
- transmit the measurement result to a signal processing unit or
- at least provide the measurement result to a signal processing unit and inform the latter by a preferably electrical signal about the presence of a new measurement result.

3. Method according to either Claim 1 or 2, wherein
the coordinate measuring device and/or the measuring sensor store the sequence of measurement
results and the sequence of measurement results subsequently in precisely the temporal order of the measurement result generation
- is transmitted to a signal processing device or
- provided to a signal processing unit.

4. Method according to one of Claims 1 to 3, wherein the measurement results of the coordinate measuring device and/or the measurement results of the measuring sensor, combined block by block to form a number of measurements,
- are transmitted to a signal processing device or
- are provided to at least one signal processing unit.

5. Measuring unit for determining measuring points on a workpiece which has a coordinate measuring device and a measuring sensor, wherein the measuring unit has means for performing the following method:
- the coordinate measuring device generates measurement data having a first measurement data rate,
wherein a measuring time for measuring a measurement result of the coordinate measuring device is determined by a first trigger signal
- the measuring sensor generates measurement data having a second measurement data rate and a measuring time for measuring a measurement result of the measuring sensor is determined by a second trigger signal
- the first trigger signal and the second trigger signal are in a known temporal relation, wherein the known temporal relation is equality and the first trigger signal and the second trigger signal is a common electrical trigger signal
- **characterized in that** to each measurement result, a cyclically unambiguous identifier is added which is unambiguous up to a maximum number of measurement results and is repeated after exceeding the maximum number, wherein the cyclically unambiguous identifier is a TAN number which is incremented after an initialization of the coordinate measuring device and by the measuring sensor with each electric trigger signal.

6. Measuring unit according to Claim 5, there being means for carrying out a method according to one of Claims 2 to 4.

## Revendications

1. Procédé de détermination de points de mesure sur une pièce au moyen d'un appareil de mesure de coordonnées doté d'un capteur de mesure,
l'appareil de mesure de coordonnées formant des données de mesure à un premier taux de données de mesure pour mesurer un résultat de mesure de l'appareil de mesure de coordonnées, l'instant de mesure étant déterminé par un premier signal de gâchette,
le capteur de mesure formant des données de mesure à un deuxième taux de données de mesure pour mesurer un résultat de mesure du capteur de mesure, l'instant de mesure étant déterminé par un deuxième signal de gâchette,
le premier signal de gâchette et le deuxième signal de gâchette étant en relation temporelle et la relation temporelle connue étant une identité, le premier signal de gâchette et le deuxième signal de gâchette étant un signal électrique de gâchette commun, **caractérisé en ce que**
un identificateur cyclique univoque qui est univoque jusqu'à un nombre maximum de résultats de mesure et qui se répète lorsque le nombre maximum est dépassé est ajouté à chaque résultat de mesure, l'identificateur cyclique univoque étant un numéro TAN qui, après une initialisation, est augmenté par l'appareil de mesure de coordonnées et par le capteur de mesure lors de chaque signal électrique de gâchette.

2. Procédé selon la revendication 1, dans lequel l'appareil de mesure de coordonnées et/ou le capteur transfèrent le résultat de mesure à une unité de traitement de signaux ou mettent au moins à disposition d'une unité de traitement de signaux le résultat de mesure et informent cette dernière de la présence d'un nouveau résultat de mesure par un signal de préférence électrique.

3. Procédé selon l'une des revendications 1 ou 2, dans lequel l'appareil de mesure de coordonnées et/ou le capteur de mesure conservent en mémoire la succession de résultats de mesure, la succession de résultats de mesure étant ensuite transférée à un dispositif de traitement de signaux ou mis à disposition d'une unité de traitement de signaux exactement dans la succession temporelle de la formation des résultats de mesure.

4. Procédé selon l'une des revendications 1 à 3, dans lequel le résultat de mesure de l'appareil de mesure de coordonnées et/ou le résultat de mesure du capteur de mesure sont rassemblés en bloc de plusieurs mesures et sont transférés à une unité de traitement de signaux ou sont au moins mis à disposition d'une unité de traitement de signaux.

5. Unité de mesure permettant de déterminer des points de mesure sur une pièce, l'unité de mesure présentant un appareil de mesure de coordonnées et un capteur de mesure, l'unité de mesure présentant des moyens permettant la mise en oeuvre du procédé suivant :
l'appareil de mesure de coordonnées forme des données de mesure à un premier taux de données de mesure pour mesurer un résultat de mesure de l'appareil de mesure de coordonnées, l'instant de mesure étant déterminé par un premier signal de gâchette,
le capteur de mesure forme des données de mesure à un deuxième taux de données de mesure pour mesurer un résultat de mesure du capteur de mesure, l'instant de mesure étant déterminé par un deuxième signal de gâchette,
le premier signal de gâchette et le deuxième signal de gâchette étant en relation temporelle et la relation temporelle connue étant une identité, le premier signal de gâchette et le deuxième signal de gâchette étant un signal électrique de gâchette commun, **caractérisé en ce que**
un identificateur cyclique univoque qui est univoque jusqu'à un nombre maximum de résultats de mesure et qui se répète lorsque le nombre maximum est dépassé est ajouté à chaque résultat de mesure, l'identificateur cyclique univoque étant un numéro TAN qui, après une initialisation, est augmenté par l'appareil de mesure de coordonnées et par le capteur de mesure lors de chaque signal électrique de gâchette.

6. Unité de mesure selon la revendication 5, présentant des moyens permettant de mettre en oeuvre un procédé selon l'une des revendications 2 à 4.
